Europäisches Patentamt

European Patent Office

Office européen des brevets

(19)

(11) Veröffentlichungsnummer: **0 279 043 B1**

(12) **EUROPÄISCHE PATENTSCHRIFT**

(45) Veröffentlichungstag der Patentschrift: **11.09.91**

(21) Anmeldenummer: **87117897.6**

(22) Anmeldetag: **03.12.87**

(51) Int. Cl.5: **F24D 19/10**, G05D 23/13, F16K 31/04

(54) **Mischerantrieb.**

(30) Priorität: **17.02.87 DE 8702443 U**

(43) Veröffentlichungstag der Anmeldung:
**24.08.88 Patentblatt 88/34**

(45) Bekanntmachung des Hinweises auf die Patenterteilung:
**11.09.91 Patentblatt 91/37**

(84) Benannte Vertragsstaaten:
**AT BE CH FR LI LU NL**

(56) Entgegenhaltungen:
**BE-A- 751 381**
**DE-A- 3 515 590**
**DE-U- 8 323 657**
**FR-A- 2 221 670**
**US-A- 3 556 467**

**PATENT ABSTRACTS OF JAPAN, Band 8, Nr. 262 (M-341)[1699], 30. November 1984; & JP-A-59 133 882 (MATSUSHITA DENKI SANGYO K.K.) 01-08-1984**

(73) Patentinhaber: **Viessmann Werke GmbH & Co.**
**Postfach 10 Viessmannstrasse**
**W-3559 Allendorf (Eder)(DE)**

(72) Erfinder: **Viessmann, Hans, Dr.**
**Im Hain 24**
**W-3559 Battenberg/Eder(DE)**

(74) Vertreter: **Patentanwälte Beetz sen. - Beetz jun. Timpe - Siegfried - Schmitt-Fumian**
**Steinsdorfstrasse 10**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft einen Mischerantrieb für Drei- und Vierweg-Mischventile von mit einem flüssigen Wärmeträgermedium gefüllten Heizungsanlagen gemäß dem Oberbegriff des Anspruchs 1.

Ein derartiger gattungsgemäßer Mischerantrieb ist bekannter Stand der Technik (vgl. z. B. den Firmenprospekt Nr. 9444 001-1 'Heizungsmischer' der Firma Viessmann Werke GmbH & Co, Allendorf/Eder, aus 1977).

Dieser vorbekannte Mischerantrieb stellt eine vergleichsweise aufwendige Konstruktion dar, da die Abtriebswelle des Getriebes der Antriebseinheit bis außerhalb des Motorgehäuses hindurchgeht und mit einer separaten Nockenscheibe versehen ist, die bei der Montage ebenso wie der am aus dem Motorgehäuse herausragenden freien Ende angebrachte Stellhebel winkelmäßig in Bezug auf die Schaltpunkte der Endlagenschalter genau justiert und mit einer Stellschraube festgelegt werden muß, wobei auch den Fertigungstoleranzen der Endlagenschalter hinsichtlich drehwinkelmäßig wechselnder Schaltpunkte Rechnung getragen werden muß.

Ein weiterer Nachteil einer Ausführungsform des herkömmlichen Mischerantriebs liegt darin, daß die Befestigungseinrichtung aus einem separaten, in der Seitenansicht U-förmigen Blechteil besteht, dessen eine Seitenfläche mit der Unterseite des Gehäuseunterteils und dessen beide Laschenteile, die in der Seitenansicht der anderen U-Seite entsprechen, mit dem Mischventil verschraubt sind, so daß für den Stellhebel bzw. den damit im Eingriff stehenden Betätigungshebel des Mischventils eine entsprechende Ausnehmung in der Bodenfläche der U-förmigen Befestigungseinrichtung erforderlich ist, die dem Winkelweg des Stellhebels entspricht, der erforderlichenfalls, etwa bei Ausfall der Regeleinrichtung, die den Mischerantrieb steuert, auch von Hand betätigbar sein muß.

Bei einer anderen Ausführungsform eines vorbekannten Mischerantriebs sind auf einer zusätzlichen, aufgeschraubten Bodenplatte zwei sich in Längsrichtung des Mischerantriebs erstreckende Seitenträger zu beiden Seiten der Achse des Stellhebels vorgesehen, an deren rechtwinklig nach außen abgebogenen Enden die Laschenteile zur Befestigung am Mischventil vorgesehen sind, wobei die Laschenteile entsprechend den Extrempositionen des Stellhebels in der Vorderansicht abgeschrägt ausgebildet sind, um den Stellhebel nicht zu behindern, da sie in der Nähe der Achse des Mischerantriebs vorgesehen sind. Auch diese Konstruktion ist konstruktiv und fertigungsmäßig aufwendig und verlangt Justierarbeit bei der Montage an Mischventilen.

Weitere Nachteile der vorbekannten Mischerantriebe liegen in der relativ materialaufwendigen und daher in der Herstellung teuren Bauweise, dem hohen Montageaufwand und dem Umstand, daß keine Rutschkupplung vorgesehen werden kann, die bei festgefressenem bzw. mit normalem, vorgesehenem Drehmoment nicht mehr bewegbarem Mischventil eine Motorüberlastung verhindert.

Aus der BE-A-751 381 ist ein zwischen einer Offenstellung und einer Schließstellung verstellbares Ventil mit einem motorischen Stellantrieb bekannt. Eine am Ventilkörper befestigte Halterung trägt ein Gehäuse, in dem der Elektromotor und zugehörige elektrische Bauteile des Stellantriebs angeordnet sind. Zwischen dem Elektromotor und dem Ventil ist ein zylindrisches Verbindungsstück vorgesehen, welches die Motorwelle und eine dem kugelförmigen Ventilschieber zugeordnete Stellwelle unmittelbar miteinander verbindet. An dem zylindrischen Verbindungsstück sind Schaltnocken angeformt, die mit entsprechenden Endschaltern zusammenwirken.

Der Erfindung liegt, ausgehend von diesem Stand der Technik, die Aufgabe zugrunde, einen Mischerantrieb anzugeben, der bei geringstmöglichen Gestehungs- und Produktionskosten und minimalen Materialkosten die Nachteile der herkömmlichen Mischerantriebe nicht aufweist und so konzipiert ist, daß die Montage, besonders im Hinblick auf eine automatisierte Fertigung, vereinfacht und der Justieraufwand verringert sind, wobei die Befestigungseinrichtung bei leichter Anbringbarkeit an Mischventilen zugleich material- und montagekostengünstig ausgebildet sein soll.

Ferner soll die Konzeption des Mischerantriebs eine platzsparende Konstruktion, insbesondere mit geringer Bauhöhe in Achsenrichtung, sowie eine Integration mit Regel-, Fernbedienungs- und/oder Steuerungseinheiten, wie Schaltuhren etc., erlauben.

Die Aufgabe wird mit den Merkmalen des Patentanspruchs 1 gelöst. Vorteilhafte Aus führungsformen sind Gegenstand der Unteransprüche.

Die Antriebseinheit ist günstigerweise so angeordnet, daß das aus der Lagerbohrung des Gehäuseunterteils herausragende außenliegende Ende des Schaltnockenteils etwa in der Mitte des Gehäusebodens des Gehäuseunterteils liegt, wobei das Motorgehäuse in seinen Abmessungen nach einer Weiterbildung so dimensioniert sein kann, daß es zusätzliche elektronische Komponenten, wie Schaltuhren, Regeleinrichtungen, Fernbedienungseinrichtungen, Stromversorgungseinrichtungen etc., zusätzlich aufzunehmen vermag.

Nach einer bevorzugten Ausführungsform weist das Schaltnockenteil an der zur Leiterplatte hin liegenden Seite der Nockenscheibe im Querschnitt gerundete Nasen auf, die auf der Oberfläche der Leiterplatte gleitend anliegen; die Leiterplatte übernimmt so eine Lagerfunktion und verhindert zugleich ein Herausrutschen des Schaltnockenteils aus dem Motorgehäuse.

Die Lagerung des Schaltnockenteils erfolgt günstigerweise im Bereich seines zylindrischen Körpers in einer Lagerbohrung des Gehäuseunterteils, wobei das Schaltnockenteil günstigerweise eine Nut mit O-Ring als Dichtung aufweist.

Für die Verbindung des Stellhebels mit dem außenliegenden Ende des Schaltnockenteils bestehen zahlreiche Möglichkeiten, beispielsweise Befestigung durch Querstift oder Stellschraube, jedoch weist der Stellhebel vorzugsweise eine feine Innenverzahnung auf, die auf eine entsprechende feine Außenverzahnung des außenliegenden Endes des Schaltnockenteils aufsteckbar und bevorzugt auch einrastbar ist, da mit einer derartigen feinen Verzahnung eine besonders leichte Montage, insbesondere Endmontage am Mischerantrieb, möglich ist, da der Stellhebel lediglich in der gewünschten Winkelstellung auf das außenliegende Ende des Schaltnockenteils aufgesteckt werden muß.

Die Verbindung der Abtriebswelle des Getriebes mit dem Schaltnockenteil erfolgt günstigerweise über eine schraubenlose Steckverbindung, wobei die Abtriebswelle in eine entsprechende Buchse am innenliegenden Ende des Schaltnockenteils eingesteckt ist. Bevorzugt ist hierbei, wenn die Abtriebswelle des Getriebes in dem in das Schaltnockenteil eingreifenden Bereich eine Abflanschung aufweist und das Schaltnockenteil in diesem Bereich an die Abflanschung der Abtriebswelle formangepaßt ist, so daß sich hierdurch eine kraftschlüssige Verbindung durch einfaches Einstecken ergibt, wodurch wiederum die Montage des Mischerantriebs vereinfacht wird.

Für bestimmte Anwendungsfälle weist das Schaltnockenteil ferner vorzugsweise eine Rutschkupplung auf, die bevorzugt im Bereich des eingesteckten Endes der Abtriebswelle des Getriebes, also am innenliegenden Ende des Schaltnockenteils, vorgesehen ist. Gemäß einer hierfür günstigen Ausführungsform weist das Schaltnockenteil im Bereich des eingesteckten Endes der Abtriebswelle des Getriebes eine an diese formangepaßte zylindrische Buchse auf, in der ein der Abflanschung der Abtriebswelle entsprechendes und den Raum der Abflanschung einnehmendes separates Kupplungsteil eingesetzt ist, dessen radiale Abmessungen so dimensioniert sind, daß es die Abtriebswelle kraft- und formschlüssig mit dem Schaltnockenteil kuppelt, wodurch sich eine Rutschkupplung ergibt, deren Grenz-Drehmoment, bei dem die Rutschkupplungswirkung einsetzt, durch die radiale Dimensionierung in Bezug auf die Buchse des Schaltnockenteils einstellbar ist, insbesondere, wenn das Schaltnockenteil und das separate Kupplungsteil aus Kunststoff gefertigt sind.

Alternativ weist das Schaltnockenteil erfindungsgemäß günstigerweise zwischen dem außenliegenden Ende und dem Bereich der Nockenscheibe 15 eine Rutschkupplung auf, wodurch der Antrieb auch bei Blockierung des Stellhebels in jedem Fall in eine Ausschaltstellung gelangt.

Der radiale Abstand der Schaltnocken der Nockenscheibe, die im Schaltnockenteil integriert ist, vom Mittelpunkt ist günstigerweise so groß, daß durch Fertigungstoleranzen der Endlagenschalter bedingte Winkelstellungsabweichungen des Schaltnockenteils an den Schaltpunkten und damit Winkelstellungsabweichungen des Stellhebels bzw. des Mischventil-Betätigungshebels vernachlässigbar sind.

Während im Stand der Technik die Leiterplatte (7) zumeist oval bzw. in sehr speziellen Sonderformen ausgebildet vorliegt, ist die Leiterplatte erfindungsgemäß bevorzugt rechtwinklig oder quadratisch, da hierdurch eine Herstellung ohne spezielle Stanzwerkzeuge sowie ferner maschinelle Bestückung und Löten in Standard-Lötrahmen möglich sind.

Das Motorgehäuse weist bevorzugt an seinem Gehäuseunterteil einen am Umfang vorgesehenen, durchgehenden Rand auf, der mit einer Stufe versehen ist, auf den das entsprechend formangepaßte Gehäuseoberteil formschlüssig aufsetzbar ist, wobei erforderlichenfalls eine Dichtung im Gehäuseunterteil oder im Gehäuseoberteil vorgesehen sein kann, um, zusammen mit dem in der Lagerbohrung vorgesehenen O-Ring, ein wassergeschütztes Gehäuse zu erzielen.

Im Hinblick auf die sehr breite Verwendbarkeit des erfindungsgemäßen Mischerantriebs in Verbindung mit weiteren elektrischen oder elektronischen Einrichtungen, wie Fernbedienungen, Stromversorgungen, Schaltuhreinrichtungen, Regeleinrichtungen etc., weist das Gehäuseunterteil in der Unterseite des Rands günstigerweise ausbrechbare Öffnungen auf, hinter denen Zugentlastungen angeordnet bzw. einsetzbar sind, wobei es besonders günstig ist, die Zugentlastungen steckbar auszuführen, da hierdurch die Montage besonders erleichtert und vereinfacht wird.

Das Motorgehäuse mit Gehäuseunterteil und Gehäuseoberteil besteht besonders günstig aus Kunststoff, wobei sich sowohl Thermoplaste als auch Duroplaste grundsätzlich eignen; bevorzugt sind schlagfeste Copolymere, beispielsweise auf der Basis von ABS-Harzen oder modifizierten Polyamiden.

Nach einer bevorzugten Weiterbildung weist das Gehäuseunterteil vier angeformte Lagerzapfen auf, deren Enden so ausgebildet sind, daß sie in entsprechende Bohrungen der Leiterplatte eingreifen und diese so zentrieren, wobei die Getriebegrundplatte der Antriebseinheit über auf der Leiterplatte aufstehende Distanzhülsen an den Lagerzapfen befestigt ist, beispielsweise durch Schrauben.

Eine besonders einfache Konstruktion des im Querschnitt insbesondere rechteckig ausgebildeten Motorgehäuses umfaßt zwei an der Innenseite des Randes der oberen Längsseite des Gehäuseoberteils vorgesehene leistenförmige Vorsprünge, die in entsprechende Vertiefungen im Rand des Gehäuseunterteils eingreifen, sowie eine am Rand der unteren Längsseite des Gehäuseoberteils außen angeformte Schraubenbuchse, die über einer entsprechenden Gewindebuchse am Rand des Gehäuseunterteils liegt und eine Verschlußschraube aufnimmt, da hierdurch ein sicherer Verschluß des Motorgehäuses mit einer einzigen Schraube möglich ist, was neben der Montage auch für Servicearbeiten besonders günstig ist, da nach Lösen der einzigen Verschlußschraube das Gehäuseoberteil in einfacher Weise nach oben abgeklappt und abgenommen werden kann.

Das Gehäuseoberteil des erfindungsgemäßen Mischerantriebs dient nicht notwendig nur als Deckel für das Motorgehäuse; günstige Weiterbildungen sind ggfs. so gestaltet, daß das Gehäuseoberteil in der Seitenansicht pultförmig ausgebildet ist, wobei es etwa trapezförmige Seitenflächen aufweist, und die Oberseite in Gebrauchslage um einen vorgegebenen Winkel aus der Senkrechten nach oben gekippt angeordnet ist; in oder auf der Hauptfläche des Gehäuseoberteils können weitere elektronische Komponenten, wie z. B. Regeleinrichtungen, Fernbedienungseinrichtungen und/ oder Steuerungseinheiten, wie Schaltuhren etc., vorgesehen sein, wodurch sich dann funktionell autonome Mischerantriebe ergeben, an die lediglich übliche Temperaturfühler anzuschließen sind.

Das Gehäuseoberteil kann ferner günstigerweise auch als Zwischenteil ausgebildet sein, insbesondere auch in der oben erläuterten Pultform, auf oder in dem dann die oben genannten weiteren elektronischen Komponenten vorgesehen sein können.

Daraus ergibt sich, daß die erfindungsgemäße Konzeption, insbesondere aufgrund ihrer leicht realisierbaren geringen Bauhöhe, in besonderer Weise für mit dem Gehäuseoberteil integrierte zusätzliche elektronische Komponenten geeignet ist.

Die Erfindung wird im folgenden anhand eines Ausführungsbeispiels unter Bezug auf die Zeichnungen näher erläutert; es zeigen:

Fig. 1: Einen Querschnitt durch einen erfindungsgemäßen Mischerantrieb, der an ein Mischventil angeflanscht ist;

Fig. 2: eine Draufsicht auf den Mischerantrieb von Fig. 1 von oben;

Fig. 3: eine Schnittdarstellung des Mischrantriebs von Fig. 1 längs der Linie A-B in Fig. 2 im Maßstab 2:1 gegenüber Fig. 2;

Fig. 4: eine Schnittdarstellung des Mischerantriebs von Fig. 1 längs der Linie C-D in Fig. 2 im Maßstab 2:1 gegenüber Fig. 2;

Fig. 5: eine Schnittdarstellung des Mischerantriebs von Fig. 1 längs der Linie E-F von Fig. 2 im Maßstab 2:1 gegenüber Fig. 2;

Fig. 6: eine Seitenansicht des Mischerantriebs von Fig. 1 von oben;

Fig. 7: eine Vorderansicht auf Mischventil-Stellhebel eines Mischventils in den beiden Endlagen mit Laschenauflagen;

Fig. 8: einen seitlichen axialen Querschnitt durch das Gehäuseunterteil des Mischerantriebs von Fig. 1;

Fig. 9: eine Draufsicht auf das Gehäuseoberteil des Mischerantriebs von Fig. 1 von oben;

Fig.10: einen seitlichen axialen Querschnitt durch das Gehäuseoberteil des Mischerantriebs von Fig. 1;

Fig.11: einen Querschnitt durch das Gehäuseoberteil des Mischerantriebs von Fig. 1 von oben unterhalb der Mittellinie;

Fig. 12: einen axialen Querschnitt durch das Schaltnockenteil des Mischerantriebs von Fig. 1;

Fig. 13: einen axialen Querschnitt durch eine andere Ausführungsform des Schaltnockenteils mit aufgesetztem Endteil sowie

Fig. 14: eine Draufsicht auf das Schaltnockenteil des Mischerantriebs von Fig. 1 vom außenliegenden Ende her.

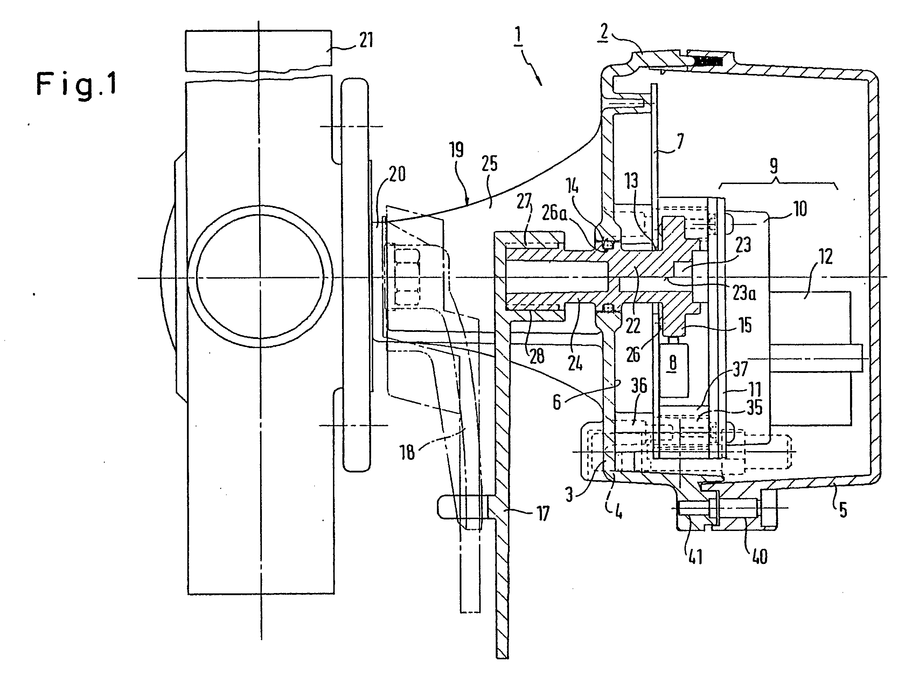

In Fig. 1 ist ein erfindungsgemäßer Mischerantrieb 1 dargestellt, der an einem Mischventil 21 angeflanscht ist. Der Mischerantrieb 1 umfaßt ein Motorgehäuse 2, das aus einem Gehäuseunterteil 3 mit Kabeleinführungen 4 und einem Gehäuseoberteil 5 besteht. Auf dem Gehäuseboden 6 des Gehäuseunterteils 3 ist die Leiterplatte 7 auf Lagerzapfen 36 von der Grundfläche des Gehäuseunterteils 3 beabstandet vorgesehen; oberhalb der Leiterplatte 7 ist, über Distanzhülsen 37 von der Leiterplatte 7 beabstandet, eine Antriebseinheit 9 vorgesehen, die aus einem Getriebe 10 mit einer Getriebegrundplatte 11 und einem Motor 12 besteht, wobei die Getriebegrundplatte 11 mit den Lagerzapfen 36 verschraubt ist. Auf der Leiterplatte 7 sind zwei Endlagenschalter 8 angeordnet.

Auf die Abtriebswelle 23 des Getriebes 10 ist ein Schaltnockenteil 22 aufgesteckt, das einen zylindrischen Körper 24 aufweist, wobei am inneren, zur Antriebseinheit 9 hin liegenden Ende eine zentrale Öffnung vorgesehen ist, in welche die Abtriebswelle 23 des Getriebes 10, die eine Abflanschung 23a aufweist, formschlüssig eingreift, da das Innere der Öffnung des Schaltnockenteils 22 entsprechend formangepaßt ist.

Das Schaltnockenteil 22 weist am innenliegenden Ende eine integrierte Nockenscheibe 15 mit Schaltnocken auf, welche die Endlagenschalter 8 in bestimmten Winkelstellungen betätigen. Das Schaltnockenteil 22 geht durch eine Bohrung 13 der Leiterplatte hindurch, wobei es mit an der Nockenscheibe 15 vorgesehenen Nasen 26 gleitend auf der Oberfläche der Leiterplatte 7 gelagert ist. Es weist ferner eine in der Lagerbohrung 14 des Gehäuseunterteils 3 liegende Nut 26a auf, in der ein O-Ring als Dichtung angeordnet ist. Am außenliegenden Ende des Schaltnockenteils 22 befindet sich eine Außenverzahnung 27, die in eine entsprechende Innenverzahnung 28 des Stellhebels 17 eingreift.

Das Gehäuseoberteil 5 überdeckt das Gehäuseunterteil mit den darin vorgesehenen, oben genannten Bauteilen und liegt am Rand formschlüssig auf dem Gehäuseunterteil auf; es ist mit einer Verschlußschraube, die durch eine Schraubenbuchse 40 des Gehäuseoberteils 5 hindurchgeht und in einer Gewindebuchse 41 des Gehäuseunterteils eingeschraubt ist, befestigt.

An der Unterseite des Gehäuseunterteils 3 ist die Befestigungseinrichtung 19 vorgesehen, die zur Befestigung des Mischerantriebs an einem Mischventil 21 dient. Die Befestigungseinrichtung 19 umfaßt mit dem Gehäuseunterteil integrierte Seitenträger 25, die in parallel zum Gehäuseboden 6 liegende Laschenteile (20) übergehen, deren Enden nach innen, d.h. aufeinander zu, gerichtet sind.

Der Stellhebel 17 weist einen im wesentlichen U-förmigen Ansatz auf, mit dem er mit dem Betätigungshebel 18 des Mischventils 21 in Wirkverbindung steht. Nach einer bevorzugten Ausführungsform besteht der Stellhebel 17 aus einem flexiblen Kunststoff, so daß er bei Notbetrieb der Heizungsanlage, etwa bei Ausfall der Regeleinrichtung, vom Betätigungshebel 18 weggebogen und von ihm ausgehängt werden kann, so daß der Betätigungshebel 18 dann frei bewegbar ist.

Die Laschenteile 20 der Befestigungseinrichtung 19 sind mit aufgelegten Laschenauflagen mit dem Mischventil 21 verschraubt, wobei die Laschenteile 20 Langlöcher aufweisen, um eine axiale Zentrierung des Mischerantriebs mit dem Mischventil zu ermöglichen.

Das Gehäuseunterteil 3 weist an der Unterseite seines Randes ausbrechbare Öffnungen auf, hinter denen Zugentlastungen 35, von denen eine in Fig. 1 dargestellt ist, einsteckbar sind, um entsprechende Kabeleinführungen 4 zu realisieren.

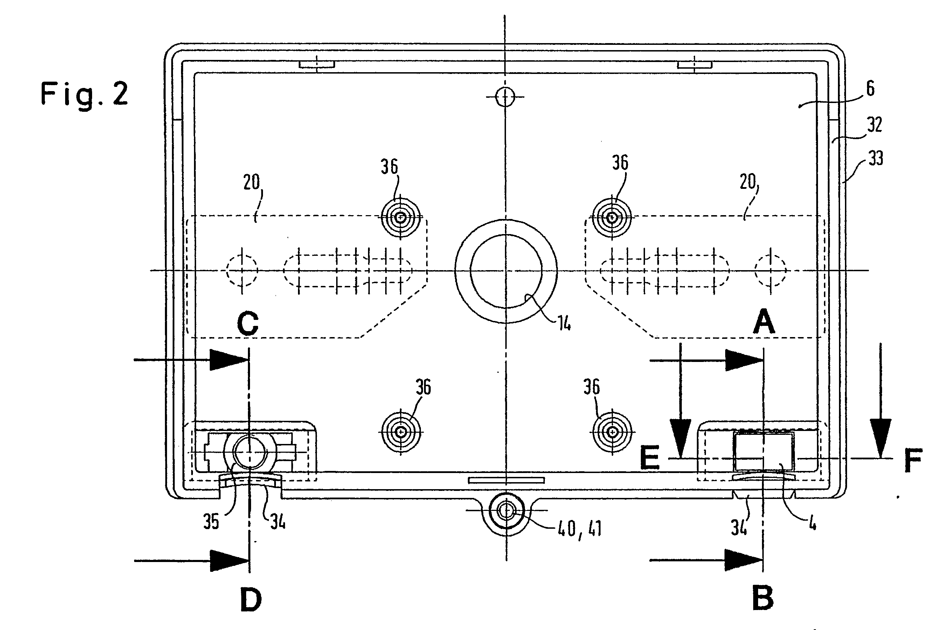

In Fig. 2 ist der Mischerantrieb 1 von Fig. 1 in der Draufsicht dargestellt, wobei insbesondere das Gehäuseunterteil 3 hervorgehoben ist. Es weist eine zentrale Lagerbohrung 14 auf, durch welche das Schaltnockenteil 22 hindurchgeht, das darin im Bereich seiner Nut 26a mit O-Ring gelagert ist. Auf dem Gehäuseboden 6 des Gehäuseunterteils 3 sind Lagerzapfen 36 vorgesehen, die vorzugsweise angeformt sind und die zur Befestigung und Zentrierung der Leiterplatte 7 sowie, über Distanzhülsen, des Getriebes 10 mit der Getriebegrundplatte 11 dienen. Die am Gehäuseunterteil bodenseitig vorgesehenen, damit integrierten Laschenteile 20 sind gestrichelt veranschaulicht. An der Unterseite des Randes 33 des Gehäuseunterteils 3, der eine Stufe 32 aufweist, um einen sichereren und dichteren Abschluß mit dem Gehäuseoberteil 5 zu ermöglichen, sind ausbrechbare Öffnungen 34 vorgesehen, die als Kabeleinführungen 4 dienen; die linke Öffnung 34 ist ausgebrochen; hinter ihr befindet sich eine Zugentlastung 35 mit Stellschraube, die in das Gehäuseunterteil 3 eingesteckt ist; hierfür ist bodenseitig unter der Bodenfläche des Gehäuseunterteils ein entsprechender Raum zur Aufnahme des Steckfußes der Zugentlastung 35 vorgesehen.

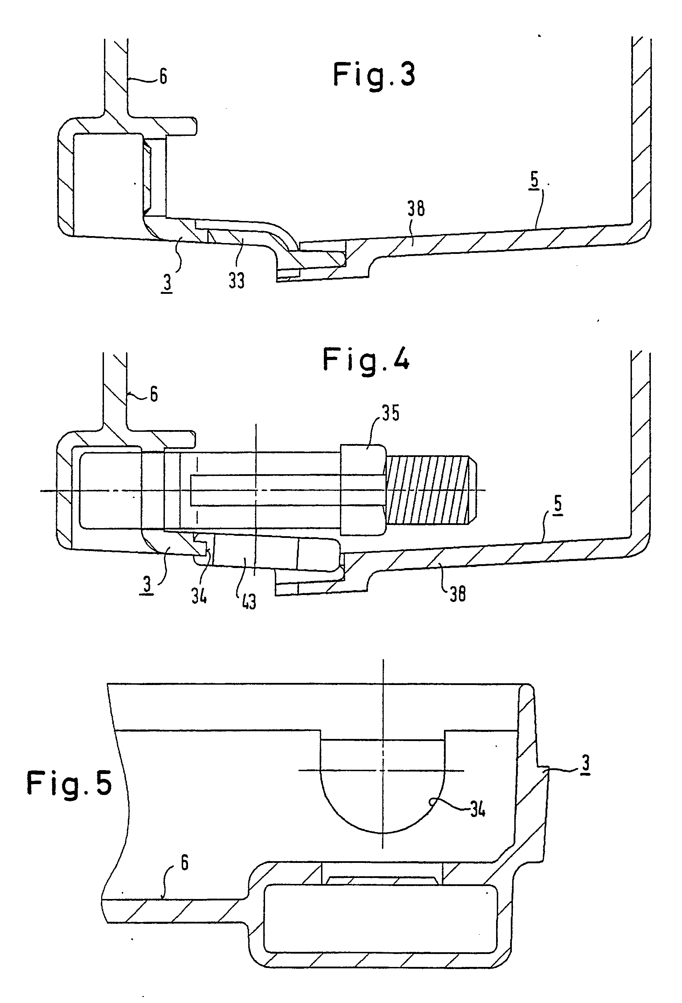

Fig. 3 ist eine Schnittdarstellung des Mischerantriebs von Fig. 1 längs der Linie A-B von Fig. 2, wobei die Darstellung gegenüber Fig. 2 im Maßstab 2:1 vergrößert ist; Fig. 3 zeigt das Übergreifen des Rands 38 des Gehäuseoberteils 5 über den Rand 33 des Gehäuseunterteils 3, auf dessen Bodenfläche 6 die oben erläuterten Komponenten aufgebaut sind. Fig. 3 zeigt ferner den an der Bodenseite des Gehäuseunterteils angeformten Raum, der zur Aufnahme des Steckfußes der Zugentlastung dient.

Fig. 4 ist eine Schnittdarstellung des Mischerantriebs von Fig. 1 längs der Linie C-D von Fig. 2, wobei auch diese Darstellung im Maßstab 2:1 gegenüber Fig. 2 vergrößert ist. Im Gehäuseboden 6 des Gehäuseunterteils 3 ist eine Zugentlastung 35 mit Stellschraube eingesteckt, die hinter der Öffnung 34 des Gehäuseunterteils 3 liegt. Das Gehäuseoberteil 5 ist an seinem Rand 38 so ausgebildet, daß es an den Stellen der Öffnungen 34 entsprechende Ausnehmungen aufweist. In die Öffnung 34 ist eine Kabeldurchführung 43 eingesteckt.

In Fig. 5 ist das Gehäuseunterteil 3 mit dem Gehäuseboden 6, ebenfalls im vergrößerten Maßstab 2:1, im Schnitt längs der Linie E-F von Fig. 2 dargestellt; Fig. 5 zeigt eine Öffnung 34 sowie den darunter befindlichen Raum zur Aufnahme des Steckfußes der Zugentlastung 35, die in Fig. 4 dargestellt ist.

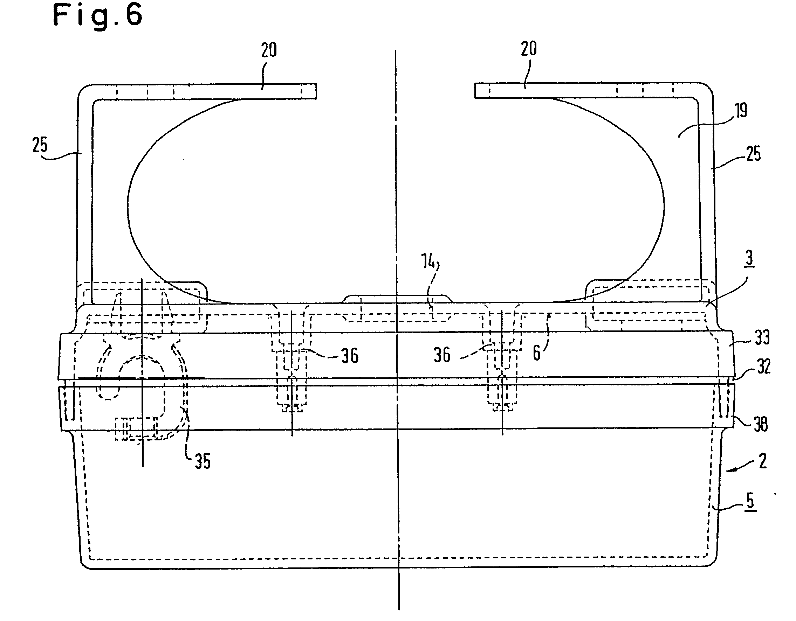

Fig. 6 stellt eine Seitenansicht des Mischerantriebs von Fig. 1 von oben dar. Das Gehäuseunterteil 3 weist auf seinem Gehäuseboden 6 Lagerzapfen 36 auf, die zur Zentrierung und Befestigung der Leiterplatte 7 sowie der Antriebseinheit 9 dienen. Ferner ist die Lagerbohrung 14 zur Lagerung des Schaltnockenteils 22 gestrichelt angedeutet.

Auf der linken Seite ist eine im Gehäuseboden 6 des Gehäuseunterteils 3 eingesteckte Zugentlastung 35 gestrichelt dargestellt.

Das Gehäuseunterteil 3 weist ferner eine damit integrierte Befestigungseinrichtung 19 auf, die im wesentlichen aus zwei Seitenträgern 25 und daran befindlichen Laschenteilen 20 besteht, wobei die in den Zeichnungen dargestellte Ausführungsform eine in der Draufsicht von oben gerundete, angeformte Abstützung aufweist, um die Winkeldeformationsbeständigkeit zu erhöhen.

Das Gehäuseunterteil 3 weist einen Rand 33 auf, der eine Stufe 32 besitzt; das Gehäuseoberteil 5 des Motorgehäuses 2 greift formschlüssig mit seinem Rand 38 über die Stufe 32 des Randes 33 des Gehäuseunterteils 3 über.

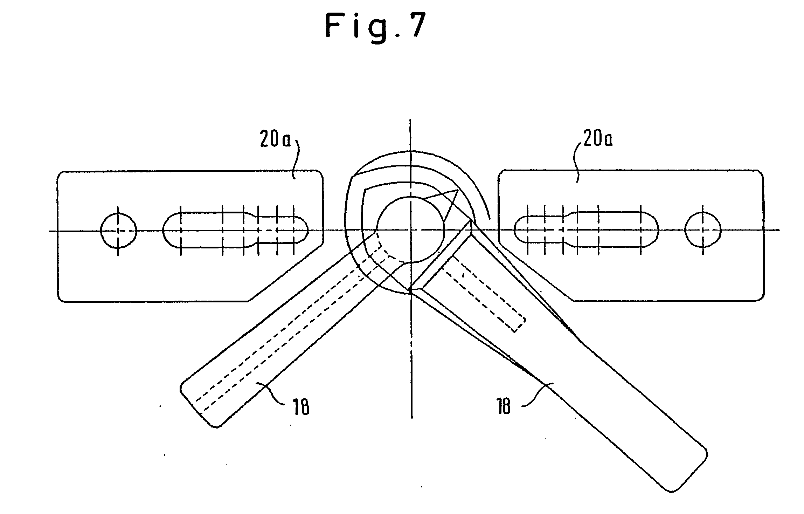

Fig. 7 ist eine schematische Darstellung von zwei verschiedenen Betätigungshebeln 18 in den beiden Extremlagen eines Mischventils; aufgrund der gabelartigen Ausbildung des Ansatzes des Stellhebels 17 kann der erfindungsgemäße Mischerantrieb sehr universell zur Steuerung verschiedener Mischventile mit unterschiedlichen Betätigungshebeln herangezogen werden. Die Laschenauflagen 20a dienen, insbesondere dann, wenn das Gehäuseunterteil mit der damit integrierten Befestigungseinrichtung aus Kunststoff besteht, zur besseren Befestigung an Mischventilen; die Laschenauflagen 20a bestehen dabei bevorzugt aus Metall.

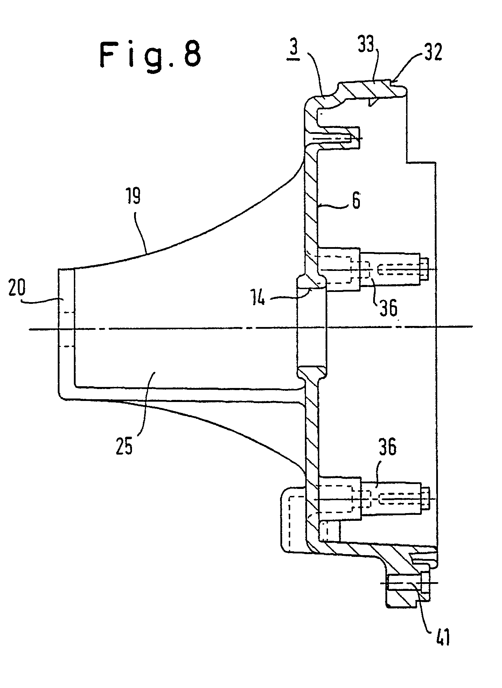

Fig. 8 zeigt das Gehäuseunterteil 3 des erfindungsgemäßen Mischerantriebs von Fig. 1 im seitlichen axialen Querschnitt. Neben der Befestigungseinrichtung 19 mit Laschenteilen 20 und Seitenträgern 25, die eine Verstärkung aufweisen, sind die Lagerbohrung 14 sowie die Lagerzapfen 36 dargestellt. Ferner ist die Stufe 32 des Randes 33 dargestellt, auf die das Gehäuseoberteil formschlüssig aufsetzbar ist, ferner die Gewindebuchse 41, in welche die Verschlußschraube, die durch die Schraubenbuchse des Gehäuseoberteils hindurchgeht, einschraubbar ist.

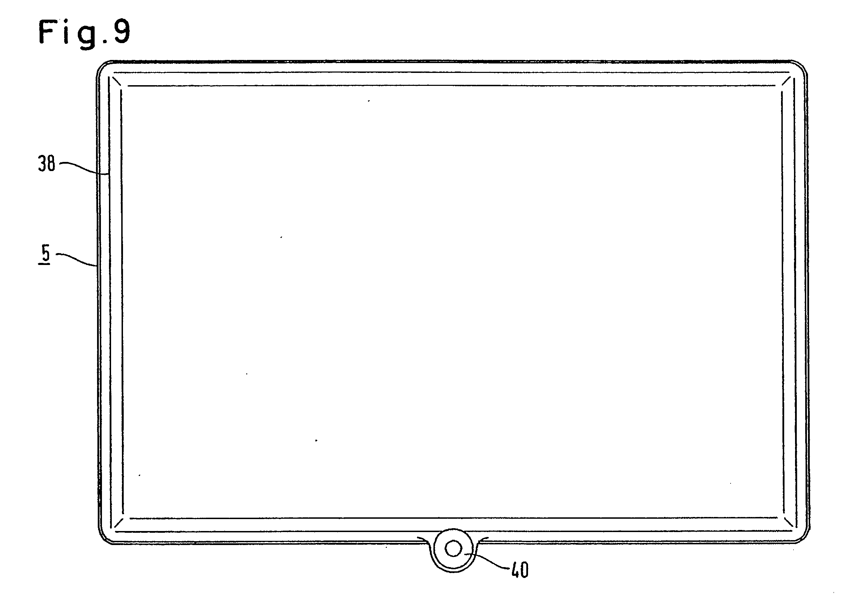

Fig. 9 zeigt eine Draufsicht auf das Gehäuseoberteil 5 des Mischerantriebs 1 von Fig. 1 von oben, wobei der Rand 38 und die Schraubenbuchse 40, die in der Mitte des Randes an der langen, unten liegenden Seite angeformt ist, dargestellt sind.

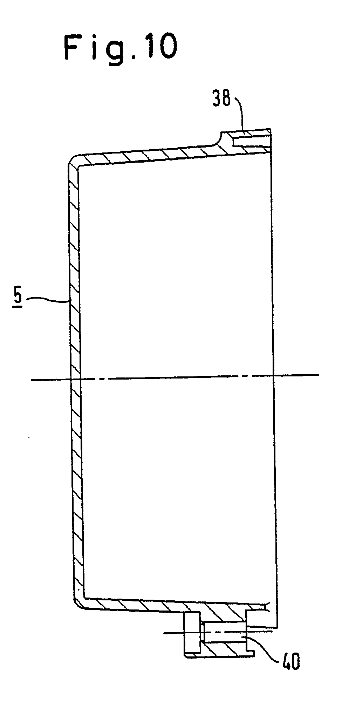

In Fig. 10 ist das Gehäuseoberteil 5 des Mischerantriebs 1 von Fig. 1 im seitlichen axialen Querschnitt dargestellt, wobei wiederum die Schraubenbuchse 40 und der Rand 38 erkennbar sind.

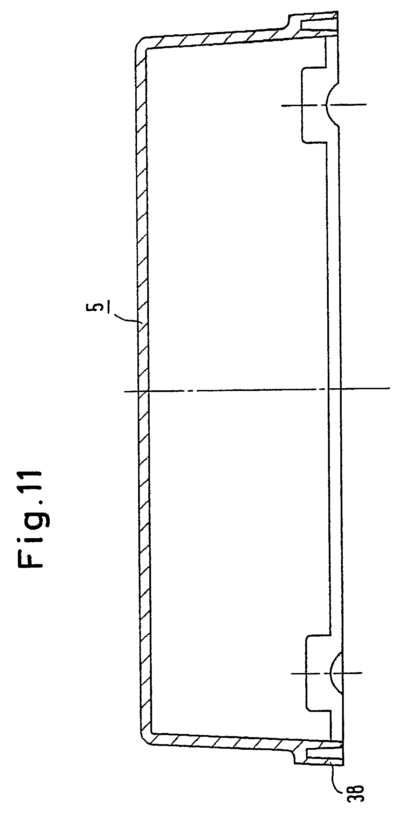

Fig. 11 stellt ebenfalls einen Querschnitt durch das Gehäuseoberteil 5 des Mischerantriebs 1 von Fig. 1 dar, wobei jedoch die Schnittebene unterhalb der Mittellinie liegt; erkennbar sind neben dem Rand 38 die Ausnehmungen für die im Gehäuseunterteil 3 vorgesehenen Kabeleinführungen.

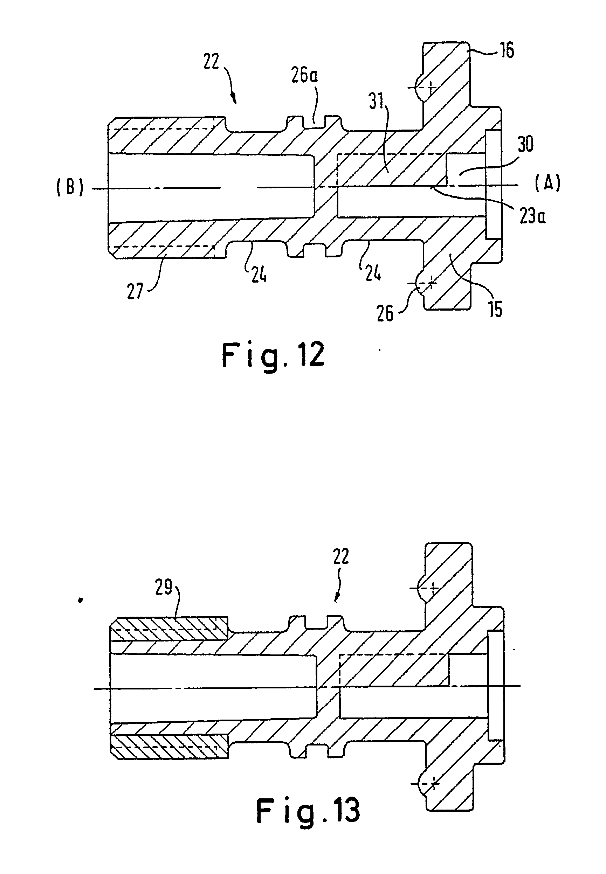

In Fig. 12 ist das Schaltnockenteil 22 des erfindungsgemäßen Mischerantriebs im Detail dargestellt; es weist einen zylindrischen Körper 24 auf, an dem eine Nockenscheibe 15 mit Schaltnocken 16 angeformt ist. An der Nockenscheibe 15 sind ferner im Querschnitt gerundete Nasen 26 vorgesehen, die, wie oben erläutert, auf der Leiterplatte 7 gleitend anliegen. Der zylindrische Körper 24 weist im mittleren Teil eine Nut 26a auf, welche die Lagerfunktion in der Lagerbohrung 14 des Gehäuseunterteils 3 übernimmt, wobei in der Nut ein O-Ring als Dichtung vorgesehen ist.

Am innenliegenden Ende A des Schaltnockenteils 22 ist eine Buchse 30 vorgesehen, in welche die mit einer Abflanschung 23a (vgl. Fig. 1) versehene Abtriebswelle 23 des Getriebes 10 einsteckbar ist, wobei die Buchse im Inneren an die Abflanschung 23a der Abtriebswelle 23 des Getriebes entsprechend formangepaßt ist. In Fig. 12 ist ferner ein Kupplungsteil 31 gestrichelt dargestellt, das ggfs. zur Erzielung einer Rutschkupplung als separates Bauteil in die Buchse 30 des Schaltnockenteils 22 eingesetzt ist; das Kupplungsteil 30 ist an die Buchse 30 sowie die Abflanschung 23a der Abtriebswelle 23 des Getriebes 10 formangepaßt und ergibt durch entsprechende Dimensionierung, insbesondere in Radialrichtung, eine Rutschkupplungswirkung.

Am außenliegenden Ende B des Schaltnockenteils 22 ist schließlich die Außenverzahnung 27 vorgesehen, die vorzugsweise eine feine Verzahnung ist, um eine rasche und zugleich genaue Justierung des Stellhebels 17, der eine entsprechende Innenverzahnung 28 aufweist, durch einfaches Aufstecken zu ermöglichen.

In Fig. 13 ist eine alternative Ausführungsform des Schaltnockenteils 22 im axialen Querschnitt dargestellt, das ein aufgesetztes Endteil 29 aufweist, das zwar als separates Teil hergestellt, jedoch mit dem Schaltnockenteil 22 integriert ist, beispielsweise insbesondere durch Verschweißen, Verkleben udgl.; Das Endteil 29 kann jedoch auch mit einer Stellschraube oder einem Stift befestigt sein.

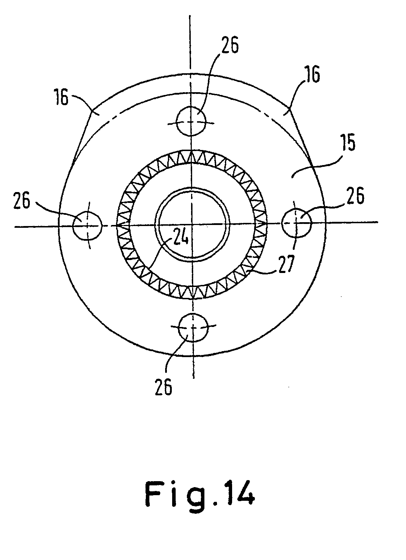

In Fig. 14 ist das Schaltnockenteil 22 des Mischerantriebs 1 von Fig. 1 vom außenliegenden Ende B her in der Draufsicht dargestellt. Erkennbar sind die beiden auf der Nockenscheibe 15 vorgesehenen Schaltnocken 16, die Kontur des Körpers 24, die Nasen 26 sowie die Außenverzahnung 27.

Aus der obigen Erläuterung ist ersichtlich, daß der erfindungsgemäße Mischerantrieb gegenüber dem Stand der Technik zahlreiche Vorteile aufweist:

Besonders vorteilhaft sind die mit der neuartigen Konzeption verbundene Kostenreduzierung durch geringere Anzahl der Bauteile und Einsparung teurer Materialien sowie die Vereinfachung der Fertigung, da es sich bei den Mischerantrieben um in relativ großen Stückzahlen hergestellte Bauteile von Heizungsanlagen handelt. Wichtig ist die erfindungsgemäß erzielte erhebliche Montagevereinfachung, die erstmals eine vollständig automatisierte Fertigung ermöglicht.

Hinzukommt, daß praktisch kein Justieraufwand beim Zusammenbau sowie der Montage bei Heizungsanlagen erforderlich ist, wobei insbesondere eine Mischervoreinstellung entfallen kann.

Weitere Vorteile liegen in der Möglichkeit einer platzsparenden, flachen Bauform, wobei hinzukommt, daß der erfindungsgemäße Mischerantrieb mit herkömmlichen Mischerantrieben problemlos austauschbar ist.

Da die Leiterplatte nicht mehr, wie im Stand der Technik, eine komplizierte, ovale Form aufweist, sondern rechteckig bzw. quadratisch ausgebildet werden kann, sind eine Herstellung ohne spezielle Stanzwerkzeuge, eine maschinelle Bestückung sowie eine Verlötung in Standard-Lötrahmen möglich, was technisch außerordentlich vorteilhaft ist.

Ein weiterer wesentlicher Vorteil liegt darin, daß durch großen Durchmesser der Nockenscheibe des Schaltnockenteils Fertigungstoleranzen der Endlagenschalter bezüglich ihrer Schaltpunkte drehwinkelmäßig keine Rolle mehr spielen, so daß ein entsprechender Justieraufwand bei Fertigung und Endmontage entfällt.

Bei Vorliegen einer Rutschkupplung sind ferner ein Durchbrennen oder eine Überlastung des Motors bei blockiertem oder zu schwergängigem Mischventil ausgeschlossen.

Das Gehäuseunterteil läßt sich ferner ohne Nachbearbeitung in einem Arbeitsgang, z.B. durch Spritzgießen, aus Kunststoff herstellen, wobei die Befestigungseinrichtung bei diesem Herstellungsschritt gleichzeitig mit erzeugt wird. Analoge Herstellungsvorteile gelten für das Gehäuseoberteil.

Das Schaltnockenteil ist ferner einfach und genau herstellbar, insbesondere aus Kunststoff; es bietet den weiteren Vorteil einer schraubenlosen Steckverbindung mit der Abtriebswelle des Getriebes, was ebenfalls mit Montagevorteilen verbunden ist.

Schließlich sind beim erfindungsgemäßen Mischerantrieb herkömmliche Stellhebel, wie sie etwa aus DE-GM 83 23 657 und DE-GM 83 23 658 bekannt sind, verwendbar.

Die Erfindungskonzeption ist entsprechend mit einem signifikanten technischen Fortschritt und erheblichen wirtschaftlichen Vorteilen verbunden.

**Patentansprüche**

1. Mischerantrieb (1) für Drei- und Vierweg-Mischventile von mit einem flüssigen Wärmeträgermedium gefüllten Heizungsanlagen, bestehend

aus einem Motorgehäuse (2), in dessen Gehäuseunterteil (3) vom Gehäuseboden (6) beabstandet eine Leiterplatte (7) mit zwei Endlagenschaltern (8) und im napfförmigen Gehäuseoberteil (5) oberhalb der Leiterplatte (7) ein Motor (12) mit Getriebe (10) angeordnet sind, dessen Abtrieb (22, 23) die Leiterplatte (7) und den Gehäuseboden (6) durchragt und oberhalb der Leiterplatte (7) eine Nockenscheibe (15) mit zwei Schaltnocken (16) zur Betätigung der Endlagenschalter (8) aufweist,

aus einem mit einem Betätigungshebel (18) des Mischventils (21) kuppelbaren Stellhebel (17), der vom Abtrieb (22, 23) über einen vorgegebenen Drehwinkelbereich verdrehbar ist und

aus einer am Gehäuseunterteil (3) vorgesehenen Befestigungseinrichtung (19) mit zwei parallel zum Gehäuseboden (6) liegenden Laschenteilen (20), mit denen der Mischerantrieb (1) an einem Mischventil (21) befestigbar ist,

dadurch **gekennzeichnet,**

daß das Gehäuseunterteil (3) mit der Befestigungseinrichtung (19) integriert und einstückig ausgebildet ist,

daß die Abtriebswelle (23) des Getriebes (10) mit einem als Bundbuchse ausgebildeten einstückigen Schaltnockenteil (22) mit zylindrischem Körper (24) verbunden ist, dessen Bund die Nockenscheibe (15) mit den beiden Schaltnocken (16) bildet, dessen Körper (24) die Leiterplatte (7) und den Gehäuseboden (6) durchragt und an dessen aus dem Gehäuseunterteil (3) herausragenden Ende der Stellhebel (17) befestigt ist,

daß das Motorgehäuse (2) mit Gehäuseunterteil (3) und Gehäuseoberteil (5) in Draufsicht im wesentlichen rechteckig ausgebildet ist, wobei in Gebrauchslage die längeren Seiten waagrecht angeordnet sind und der Stellhebel (17) den Winkelbereich über der unteren längeren Seite überstreicht, und

daß die Befestigungseinrichtung (19) zwei an den beiden kürzeren Seiten des rechteckigen Gehäuseunterteils (3) angeformte und rechtwinklig zum Gehäuseboden (6) vorspringende Seitenträger (25) umfaßt, an denen die nach innen aufeinander zu gerichteten Laschenteile (20) angeformt sind.

2. Mischerantrieb nach Anspruch 1, dadurch gekennzeichnet, daß die Antriebseinheit (9) so angeordnet ist, daß die Achse des Schaltnockenteils (22) etwa in der Mitte des Gehäusebodens (6) des Gehäuseunterteils (3) liegt.

3. Mischerantrieb nach einem der Ansprüche 1 oder 2, dadurch gekennzeichnet, daß das Schaltnockenteil (22) an der zur Leiterplatte (7) hin liegenden Seite der Nokkenscheibe (15) im Querschnitt gerundete Nasen (26) aufweist, die auf der Oberfläche der Leiterplatte (7) gleitend anliegen.

4. Mischerantrieb nach einem der Ansprüche 1 bis 3, dadurch gekennzeichnet, daß das Schaltnockenteil (22) in dem Bereich seines Körpers (24), der in der Lagerbohrung (14) des Gehäuseunterteils (3) liegt, eine Nut (26a) mit O-Ring als Dichtung aufweist.

5. Mischerantrieb nach einem der Ansprüche 1 bis 4, dadurch gekennzeichnet, daß das außenliegende Ende (B) des Schaltnockenteils (22) eine feine Außenverzahnung (27) aufweist, auf die der Stellhebel (17), der eine entsprechende Innenverzahnung (28) aufweist, aufsteckbar ist.

6. Mischerantrieb nach einem der Ansprüche 1 bis 5, dadurch gekennzeichnet, daß das außenliegende Ende (B) des Schaltnockenteils (22) ein aufgesetztes oder angeschweißtes Endteil (29) mit Außenverzahnung aufweist.

7. Mischerantrieb nach einem der Ansprüche 1 bis 6, dadurch gekennzeichnet, daß die Abtriebswelle (23) des Getriebes (10) in eine entsprechende Buchse (30) am innenliegenden Ende (A) des Schaltnockenteils (22) eingesteckt ist.

8. Mischerantrieb nach Anspruch 7, dadurch gekennzeichnet daß die Abtriebswelle (23) des Getriebes (10) in dem im Schaltnockenteil (22) liegenden Bereich abgeflanscht ist, und das Schaltnockenteil (22) in diesem Bereich an die Abflanschung (23a) der Abtriebswelle (23) formangepaßt ist.

9. Mischerantrieb nach Anspruch 7 oder 8, dadurch gekennzeichnet, daß das Schaltnockenteil (22) im Bereich des eingesetzten Endes der Abtriebswelle (23) des Getriebes (10) am innenliegenden Ende (A) eine Rutschkupplung aufweist.

10. Mischerantrieb nach Anspruch 9, dadurch gekennzeichnet, daß
    - die Abtriebswelle (23) des Getriebes (10) in dem im Schaltnockenteil (22) liegenden Bereich abgeflanscht ist und
    - das Schaltnockenteil (22) im Bereich des eingesteckten Endes der Abtriebswelle (23) am innenliegenden Ende (A) eine an die Abtriebswelle (23) formangepaßte zylindrische Buchse (30) aufweist, in der ein der Abflanschung (23a) der Abtriebswelle (23) entsprechendes und den Raum der Abflanschung (23a) einnehmendes separates Kupplungsteil (31) eingesetzt ist, das in seinen radialen Abmessungen geringfügig so überdimensioniert ist, daß es die Abtriebswelle (23) kraft- und formschlüssig mit dem Schaltnockenteil (22) kuppelt und bei Überschreitung eines durch die radiale Dimensionierung vorgegebenen Drehmoments durchrutscht.

11. Mischerantrieb nach einem der Ansprüche 1 bis 10, dadurch gekennzeichnet, daß der radiale Abstand der Schaltnocken (16) der Nockenscheibe (15) des Schaltnockenteils (22) vom Mittelpunkt so groß ist, daß durch Fertigungstoleranzen der Endlagenschalter (8) bedingte Winkelstellungsabweichungen des Schaltnockenteils (22) an den Schaltpunkten und damit Winkelstellungsabweichungen des Stellhebels (17) vernachlässigbar sind.

12. Mischerantrieb nach einem der Ansprüche 1 bis 11, dadurch gekennzeichnet, daß die Leiterplatte (7) rechtwinklig oder quadratisch ist.

13. Mischerantrieb nach einem der Ansprüche 1 bis 12, dadurch gekennzeichnet, daß die Leiterplatte (7) Steckverbindungen zum elektrischen Anschluß des Motors (12) aufweist.

14. Mischerantrieb nach einem der Ansprüche 1 bis 13, dadurch gekennzeichnet, daß das Gehäuseunterteil (3) einen an seinem Umfang durchgehenden, im Querschnitt mit einer Stufe (32) versehenen Rand (33) aufweist, auf den das Gehäuseoberteil (5) formschlüssig aufsetzbar ist.

15. Mischerantrieb nach Anspruch 14, dadurch gekennzeichnet, daß das Gehäuseunterteil (3) an der Unterseite des Randes (33) ausbrechbare Öffnungen (34) aufweist, hinter denen steckbare Zugentlastungen (35) mit Stellschraube in den Gehäuseboden (6) des Gehäuseunterteils (3) einsetzbar sind.

16. Mischerantrieb nach einem der Ansprüche 1 bis 15, dadurch gekennzeichnet, daß das Gehäuseunterteil (3) sowie das Gehäuseoberteil (5) aus Kunststoff bestehen.

17. Mischerantrieb nach Anspruch 16, dadurch gekennzeichnet, daß das Gehäuseunterteil (3) vier angeformte Lagerzapfen (36) aufweist, auf denen die Leiterplatte (7) aufliegt, und die Getriebegrundplatte (11) der Antriebseinheit (9) über auf der Leiterplatte (7) aufstehende Distanzhülsen (37) an den Lagerzapfen (36) befestigt ist.

18. Mischerantrieb nach einem der Ansprüche 2 bis 17, dadurch gekennzeichnet, daß das Gehäuseoberteil (5) an der Innenseite des Randes der in Gebrauchslage oberen Längsseite zwei längliche, leistenförmige Vorsprünge, die in entsprechende Vertiefungen im Rand (33) des Gehäuseunterteils (3) eingreifen, sowie am Rand (38) an der unteren Längsseite mittig eine außen angeformte Schraubenbuchse (40) aufweist, die über einer entsprechenden Gewindebuchse (41) am Rand (33) des Gehäuseunterteils (3) liegt und eine Verschlußschraube (42) aufnimmt.

19. Mischerantrieb nach einem der Ansprüche 1 bis 18, dadurch gekennzeichnet, daß das Gehäuseoberteil (5) als Zwischenteil ausgebildet ist, auf bzw. in dem ein Heizungsregler, eine Schaltuhreinheit und/oder eine Fernbedienungseinheit anbringbar sind.

20. Mischerantrieb nach Anspruch 19, dadurch gekennzeichnet, daß das Gehäuseoberteil (5) pultförmig mit trapezförmigen Seitenflächen ausgebildet ist, und die Oberseite des Gehäuseoberteils (5) in Gebrauchslage um einen vorgegebenen Winkel aus der Senkrechten nach oben gekippt angeordnet ist.

21. Mischerantrieb nach einem der Ansprüche 1 bis 8 und 11 bis 20, dadurch gekennzeichnet, daß im Schaltnockenteil (22) zwischen dem außenliegenden Ende (B) und der Nockenscheibe (15) eine Rutschkupplung vorgesehen ist.

## Claims

1. A mixer drive (1) for three-way and four-way mixing valves of heating systems filled with a liquid thermal medium, consisting of
   - a motor housing (2) in the housing lower portion (3) of which - spaced apart from the housing bottom (6) - a circuit board (7) with two end position switches (8), and in the cup-shaped housing upper portion (5) of which - above the circuit board (7) - a motor (12) with a transmission (10) are provided, whose output means (22, 23) extend through the circuit board (7) and the housing bottom (6) and comprise - above the circuit board (7) - a cam plate (15) with two trigger cams (16) for actuating the end position switches (8),
   - a setting lever (17) coupling to an actuating lever (18) of the mixing valve (21), which lever (17) is rotatable by the output means (22, 23) over a predetermined angle of rotation range, and of
   - a mounting means (19) provided on the housing lower portion (3) and having two bracket members (20) located parallel to the housing bottom (6) by which the mixer drive (1) may be mounted on a mixing valve (21),
   characterized in that
   - the housing lower portion (3) is formed integrally and in one piece with the mounting means (19),
   - the output shaft (23) of the transmission (10) is connected to a one-piece trigger cam member (22) with a cylindrical body (24) designed as a flange bushing whose flange forms the cam plate (15) with the two trigger cams (16), whose body (24) extends through the circuit board (7) and the housing bottom (6), and on whose end which protrudes from the housing lower portion (3) the setting lever (17) is mounted,
   - in plan view, the motor housing (2) with the housing lower portion (3) and the housing upper portion (5) is substantially rectangular, in the position of use the longer sides being arranged horizontally and the setting lever (17) sweeping through the angle range above the lower longer side, and in that
   - the mounting means (19) comprises two lateral supports (25) moulded to the two shorter sides of the rectangular housing lower portion (3) and projecting at right angles to the housing bottom (6), to which lateral supports the bracket members (20), directed inwardly and towards one another, are moulded.

2. The mixer drive according to claim 1, characterized in that the driving unit (9) is so disposed that the axis of the trigger cam member (22) is located approximately in the centre of the housing bottom (6) of the housing lower portion (3).

3. The mixer drive according to one of claims 1 or 2, characterized in that, at the side of the cam plate (15) facing the circuit board (7), the trigger cam member (22) has noses (26) which are rounded in cross-section and which slidingly abut the surface of the circuit board (7).

4. The mixer drive according to one of claims 1 to 3, characterized in that, in the region of its body (24) accommodated in the bearing bore (14) of the housing lower portion (3), the trigger cam member (22) comprises a groove (26a) with an O-ring for seal.

5. The mixer drive according to one of claims 1 to 4, characterized in that the externally located end (B) of the trigger cam member (22) comprises a fine outer toothing (27) which the setting lever (17), which has a corresponding inner toothing, may be slipped on.

6. The mixer drive according to one of claims 1 to 5, characterized in that the externally located end (B) of the trigger cam member (221 comprises a slipped-on or welded-on end member (29) with an outer toothing.

7. The mixer drive according to one of claims 1 to 6, characterized in that the output shaft (23) of the transmission (10) is inserted in a corresponding bushing (30) at the internally located end (A) of the trigger cam member (22).

8. The mixer drive according to claim 7, characterized in that, in the region of the trigger cam member (22), the output shaft (23) of the transmission (10) is provided with a flange having a recess, and in that, in this region, the trigger cam member (22) is adapted in shape to the recessed flange portion (23a) of the output shaft (23).

9. The mixer drive according to claim 7 or claim 8, characterized in that, in the region of the inserted end of the output shaft (23) of the transmission (10), at the internally located end (A), the trigger cam member (22) comprises a sliding clutch.

10. The mixer drive according to claim 9, characterized in that
   - the output shaft (23) of the transmission (10), in the region of the trigger cam member (22), is provided with a flange having a recess, and in that
   - in the region of the inserted end of the output shaft (23), at the internally located end A, the trigger cam member (22) comprises a cylindrical bushing (30) adapted in shape to the output shaft (23), into which bushing a separate clutch member (31), corresponding to the flange recess (23a) of the output shaft (23) and occupying the space provided by said flange recess (23a), is inserted, which, in its radial dimensions, is slightly overdimensioned so as to ensure frictional and positive coupling of the output shaft (23) with the trigger cam member (22), and which slides through when a torque predetermined by the radial dimensioning is exceeded.

11. The mixer drive according to one of claims 1 to 10, characterized in that the radial distance of the trigger cams (16) of the cam plate (15) of the trigger cam member (22) from the centre is so great that deviations in angle setting of the trigger cam member (22) at the switching points, and thus deviations in angle setting of the setting lever (17), resulting from manufacturing tolerances of the end position switches (8), are negligeable.

12. The mixer drive according to one of claims 1 to 11, characterized in that the circuit board (7) is rectangular or square in shape.

13. The mixer drive according to one of claims 1 to 12, characterized in that the circuit board (7) comprises plug connections for connecting the motor (12) electrically.

14. The mixer drive according to one of claims 1 to 13, characterized in that the housing lower portion (3) comprises a rim (33) which is continuous at its periphery and in cross-section is provided with a shoulder (32), to which the housing upper portion (5) may be superposed for positive engagement.

15. The mixer drive according to claim 14, characterized in that on the underside of the rim (33) the housing lower portion (3) comprises openings (34) that may be broken away and behind which plug-in traction reliefs (35) with set screw may be inserted in the housing bottom (6) of the housing lower portion (3).

16. The mixer drive according to claims 1 to 15, chararacterized in that the housing lower portion (3) as well as the housing upper portion (5) consist of plastic material.

17. The mixer drive according to claim 16, characterized in that the housing lower portion (3) has four moulded-on journals (36) on which the circuit board (7) rests, and in that the transmission base plate (11) of the drive unit (9) is mounted on the journals (36) via spacer sleeves (37) standing up from the circuit board (7).

18. The mixer drive according to one of claims 2 to 17, characterized in that, on the inside of the rim of the upper longitudinal side, seen in the position of use, the housing upper portion (5) comprises two elongate, ledge-shaped projections engaging corresponding recesses in the rim (33) of the housing lower portion (3), and on the rim (38) - at the centre of the lower longitudinal side - a screw box (40) moulded thereto externally and disposed above a corresponding threaded bush (41) on the rim (33) of the housing lower portion (3) to receive a screw plug (42).

19. The mixer drive according to one of claims 1 to 18, characterized in that the housing upper portion (5) is designed as an intermediate portion on or in which an automatic heating control, a switch clock unit and/or a remote control unit may be mounted.

20. The mixer drive according to claim 19, characterized in that the housing upper portion (5) is in the form of a desk with trapezoidal lateral surfaces, and in that the upper side of the housing upper portion (5), in the position of use, is arranged in an upwardly tilted manner by a predetermined angle from the vertical.

21. The mixer drive according to one of claims 1 to 8 and 11 to 20, characterized in that in the trigger cam member (22), between the externally located end (B) and the cam plate (15), a through-sliding clutch is provided.

**Revendications**

1. Commande de mitigeur (1) destinée à des robinets mitigeurs à trois ou à quatre voies d'installations de chauffage remplies d'un milieu caloporteur liquide, comprenant

un boîtier de commande (2), dans la partie inférieure (3) duquel est disposée, à distance du fond (6) du boîtier, une carte à circuits imprimés (7) portant deux interrupteurs de fin de course (8), et dans la partie supérieure (5) en forme de cuvette duquel est disposé, au-dessus de la carte imprimée (7), un moteur (12) auquel est combiné un réducteur de vitesse (10) dont l'organe de sortie (22, 23) s'étend à travers la carte imprimée (7) et le fond (6) du boîtier et présente, au-dessus de la carte imprimée (7), une came discoïde (15) avec deux bossages ou rampes (16) pour l'actionnement des interrupteurs de fin de course (8),

un levier de positionnement (17) accouplable à une manette (18) du robinet mitigeur (21) et qui peut être tourné par l'organe de sortie (22, 23) dans une plage angulaire préfixée, ainsi que

un dispositif de fixation (19) prévu sur la partie inférieure (3) du boîtier et possédant deux parties constituant des pattes (20) parallèles au fond (6) du boîtier et au moyen desquelles la commande de mitigeur (1) peut être fixée à un robinet mitigeur (21),

caractérisée en ce

que la partie inférieure (3) du boîtier est intégrée au dispositif de fixation (19) et réalisée d'un seul tenant avec lui,

que l'arbre de sortie (23) du réducteur (10) est relié à une pièce à came (22) d'un seul tenant, réalisée comme une pièce pourvue d'un collet et possédant un corps cylindrique (24), pièce dont le collet forme la came discoïde (15) avec les deux bossages ou rampes (16), dont le corps (24) traverse la carte imprimée (7) et le fond (6) du boîtier et à l'extrémité de laquelle dépassant à l'extérieur de la partie inférieure (3) du boîtier, est fixé le levier de positionnement (17),

que le boîtier de commande (2), composé de la partie inférieure (3) et de la partie supérieure (5), possède une forme essentiellement rectangulaire dans la vue de dessus, les grands côtés du rectangle étant orientés horizontalement dans la position d'utilisation et le levier de positionnement (17) balayant la plage angulaire devant le grand côté situé en bas, et

que le dispositif de fixation (19) comporte deux supports latéraux (25) formés sur les deux petits côtés de la partie inférieure rectangulaire du boîtier et qui dépassent du boîtier à angle droit par rapport à son fond (6), supports sur lesquels sont formées les parties constituant les pattes (20), lesquelles sont dirigées vers l'intérieur et l'une vers l'autre.

2. Commande de mitigeur selon la revendication 1, caractérisée en ce que le bloc de commande (9) est disposé de manière que l'axe de la pièce à came (22) soit situé à peu près au milieu du fond (6) de la partie inférieure (3) du boîtier.

3. Commande de mitigeur selon la revendication 1 ou 2, caractérisée en ce que la pièce à came (22) présente, sur le côté de la came discoïde (15) dirigé vers la carte imprimée (7), des saillies (26) de section arrondie, qui sont appliquées contre et glissent sur la surface de la carte imprimée (7).

4. Commande de mitigeur selon une des revendications 1 à 3, caractérisée en ce que la pièce à came (22) présente une gorge (26a) dans laquelle est logé un joint torique pour l'étanchéité dans la région de son corps (24) située dans un alésage-palier (14) de la partie inférieure (3) du boîtier.

5. Commande de mitigeur selon une des revendications 1 à 4, caractérisée en ce que l'extrémité extérieure (B) de la pièce à came (22) porte une denture extérieure fine (27) sur laquelle peut être emboîté le levier de positionnement (17), présentant une denture intérieure (28) complémentaire.

6. Commande de mitigeur selon une des revendications 1 à 6, caractérisée en ce que l'extrémité extérieure (B) de la pièce à came (22) porte un embout (29) pourvu d'une denture extérieure et emboîté ou soudé sur cette pièce.

7. Commande de mitigeur selon une des revendications 1 à 6, caractérisée en ce que l'arbre de sortie (23) du réducteur (10) est emboîté dans une cavité (30) correspondante de l'extrémité intérieure (A) de la pièce à came (22).

8. Commande de mitigeur selon la revendication 7, caractérisée en ce que l'arbre de sortie (23) du réducteur (10) est pourvu d'un méplat sur la partie située dans la pièce à came (22), pièce dont la forme est adaptée dans cette région à la partie à méplat (23a) de l'arbre de sortie (23).

9. Commande de mitigeur selon la revendication 7 ou 8, caractérisée en ce que l'extrémité intérieure (A) de la pièce à came (22) comporte un accouplement à glissement dans la région de l'extrémité emboîtée de l'arbre de sortie (23) du réducteur (10).

10. Commande de mitigeur selon la revendication 9, caractérisée en ce que
   - l'arbre de sortie (23) du réducteur (10) est pourvu d'un méplat dans la partie située à l'intérieur de la pièce à came (22) et
   - l'extrémité intérieure (A) de la pièce à came (22) présente une douille ou une cavité cylindrique (30) dans la région de l'extrémité emboîtée de l'arbre de sortie (23), cavité dont la forme est adaptée à l'arbre de sortie (23) et dans laquelle est placée une pièce d'accouplement (31) séparée correspondant à la forme de la portion de l'arbre (23) enlevée pour la création du méplat (23a) et remplissant l'espace de cette portion d'arbre, la pièce d'accouplement étant légèrement surdimensionnées dans le sens radial, de manière qu'elle établisse une liaison par adhérence et clabotage entre l'arbre de sortie (23) et la pièce à came (22), et glisse, en permettant la rotation relative de ces deux éléments, en cas de dépassement d'un couple prédéterminé par le dimensionnement radial.

11. Commande de mitigeur selon une des revendications 1 à 10, caractérisée en ce que la distance radiale entre les bossages ou rampes (16) de la came discoïde (15) et le centre de la pièce à came (22) est si grande que les écarts de position angulaire de la pièce à came (22) aux points de commutation des interrupteurs de fin de course (8), et par suite les écarts de position angulaire du levier de positionnement (17), écarts qui sont provoqués par les tolérances de fabrication des interrupteurs de fin de course (8), sont négligeables.

12. Commande de mitigeur selon une des revendications 1 à 11, caractérisée en ce que la carte imprimée (7) est rectangulaire ou carrée.

13. Commande de mitigeur selon une des revendications 1 a 12, caractérisée en ce que la carte imprimée (7) présente des connexions à enfichage pour le raccordement électrique du moteur (12).

14. Commande de mitigeur selon une des revendications 1 à 13, caractérisée en ce que la partie inférieure (3) du boîtier possède un bord (33) s'étendant de façon continue sur la périphérie de cette partie du boîtier et dont la section droite définit un gradin (32) sur lequel la partie supérieure (5) du boîtier peut être emboîtée à complémentarité de formes.

15. Commande de mitigeur selon la revendication 14, caractérisée en ce que le dessous du bord (33) de la partie inférieure (3) du boîtier présente des trous défonçables (34), derrière lesquels des éléments de décharge de traction (35), munis d'une vis de blocage, sont emboîtables dans le fond (6) formé par la partie inférieure (3) du boîtier.

16. Commande de mitigeur selon une des revendications 1 à 15, caractérisée en ce que la partie inférieure (3) et la partie supérieure (5) du boîtier sont en plastique.

17. Commande de mitigeur selon la revendication 16, caractérisée en ce que la partie inférieure (3) du boîtier présente quatre piliers de montage (36) formés sur elle, sur lesquels est posée la carte imprimée (7) et auxquels est fixée, avec interposition de douilles d'écartement (37) placées sur la carte imprimée (7), une plaque de base (11) du réducteur du bloc de commande (9).

18. Commande de mitigeur selon une des revendications 2 à 17, caractérisée en ce que la partie supérieure (5) du boîtier est pourvue, sur le côté intérieur du bord du grand côté situé en haut en position d'utilisation, deux saillies oblongues en forme de listels, qui pénètrent dans des creux correspondants ménagés dans le bord (33) de la partie inférieure (3) du boîtier, de même que, au milieu du bord (38) du grand côté situé en bas, une douille ou une cavité de passage de vis (40), formée extérieurement, qui est située au-dessus d'une douille ou d'un trou taraudé (41) correspondant sur le bord (33) de la partie inférieure (3) du boîtier pour la réception d'une vis de fermeture (42).

19. Commande de mitigeur selon une des revendications 1 à 18, caractérisée en ce que la partie supérieure (5) du boîtier est réalisée comme une partie intermédiaire, sur ou dans laquelle peuvent être disposés un régulateur de chauffage, une unité à interrupteur horaire et/ou une unité de télécommande.

20. Commande de mitigeur selon la revendication 19, caractérisée en ce que la partie supérieure (5) du boîtier est réalisée à la façon d'un pupitre avec des faces latérales trapézoïdales et avec un dessus qui, en position d'utilisation, est basculé d'un angle préfixé vers le haut à partir de la verticale.

21. Commande de mitigeur selon une des revendications 1 à 8 et 11 à 20, caractérisée en ce qu'un accouplement à glissement est prévu dans la pièce à came (22) entre l'extrémité extérieure (B) et la came discoïde (15).

Fig.1

EP 0 279 043 B1

Fig. 2

## Fig.3

## Fig.4

## Fig.5

Fig.6

# Fig.7

EP 0 279 043 B1

Fig. 8

Fig.9

# Fig.10

Fig.11

EP 0 279 043 B1

Fig. 12

Fig. 13

Fig.14